# EUROPEAN PATENT APPLICATION

(11) **EP 4 099 320 A2**
(43) Date of publication of application: **07.12.2022**
(21) Application number: 22201373.2
(22) Date of filing: 13.10.2022
(51) Int. Cl.: G10L 15/22, G10L 15/08, G10L 15/30

(54) **METHOD AND APPARATUS OF PROCESSING SPEECH, ELECTRONIC DEVICE, STORAGE MEDIUM, AND PROGRAM PRODUCT**

(30) Priority: 15.10.2021 CN 202111207159
(71) Applicant: Apollo Intelligent Connectivity (Beijing) Technology Co., Ltd., Beijing 100176 (CN)
(72) Inventor: ZHOU, Yi, Beijing 100176 (CN)
(74) Representative: Zinkler, Franz

(57) **Abstract**

A method and an apparatus of processing a speech, an electronic device, a storage medium, and a program product, which relate to a field of an artificial intelligence technology, in particular to fields of speech, cloud computing. The method includes: acquiring a wake-up voiceprint feature of a wake-up speech configured for waking up a speech interaction function, in response to the speech interaction function being waked up; extracting at least one interactive voiceprint feature from a received interactive speech including at least one single-sound source interactive speech one-to-one corresponding to the at least one interactive voiceprint feature; determining, from the at least one interactive voiceprint feature, a target interactive voiceprint feature matched with the wake-up voiceprint feature; extracting a target speech feature from a target single-sound source interactive speech corresponding to the target interactive voiceprint feature; and transmitting the target speech feature, so that a speech recognition is performed based on the target speech feature.

## Description

### TECHNICAL FIELD

The present disclosure relates to a field of an artificial intelligence technology, in particular to fields of speech, cloud computing and other technologies. Specifically, the present disclosure relates to a method and an apparatus of processing a speech, an electronic device, a storage medium, and a program product.

### BACKGROUND

A speech interaction is a natural way of a human interaction. With a continuous development of the artificial intelligence technology, it has been achieved that a machine may understand a human speech, understand an inherent meaning of a speech, and give a corresponding feedback. In a process of the speech interaction, it is necessary to perform a natural language understanding operation such as acoustic processing, speech recognition, semantic understanding, or the like, and a natural language generation operation such as speech synthesis. In a real environment, a plurality of operations may face problems such as loud environmental noise and complex semantics in speech, which may cause an obstacle for a smooth and intelligent speech interaction.

### SUMMARY

The present disclosure provides a method and an apparatus of processing a speech, an electronic device, a storage medium, and a program product.

According to an aspect of the present disclosure, a method of processing a speech is provided, including: acquiring a wake-up voiceprint feature of a wake-up speech configured for waking up a speech interaction function, in response to the speech interaction function being waked up; extracting at least one interactive voiceprint feature from a received interactive speech, wherein the received interactive speech includes at least one single-sound source interactive speech, and the at least one single-sound source interactive speech corresponds to the at least one interactive voiceprint feature one by one; determining, from the at least one interactive voiceprint feature, a target interactive voiceprint feature matched with the wake-up voiceprint feature; extracting a target speech feature from a target single-sound source interactive speech corresponding to the target interactive voiceprint feature; and transmitting the target speech feature, so that a speech recognition is performed based on the target speech feature.

According to another aspect of the present disclosure, an apparatus of processing a speech is provided, including: a wake-up voiceprint acquisition module configured to acquire a wake-up voiceprint feature of a wake-up speech configured for waking up a speech interaction function, in response to the speech interaction function being waked up; an interactive voiceprint extraction module configured to extract at least one interactive voiceprint feature from a received interactive speech, wherein the received interactive speech includes at least one single-sound source interactive speech, and the at least one single-sound source interactive speech corresponds to the at least one interactive voiceprint feature; a determination module configured to determine, from the at least one interactive voiceprint feature, a target interactive voiceprint feature matched with the wake-up voiceprint feature; a speech feature extraction module configured to extract a target speech feature from a target single-sound source interactive speech corresponding to the target interactive voiceprint feature; and a transmission module configured to transmit the target speech feature, so that a speech recognition is performed based on the target speech feature.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method described above.

According to another aspect of the present disclosure, a non-transitory computer-readable storage medium having computer instructions therein is provided, and the computer instructions are configured to cause a computer system to implement the method described above.

According to another aspect of the present disclosure, a computer program product containing a computer program is provided, and the computer program, when executed by a processor, causes the processor to implement the method described above.

It should be understood that content described in this section is not intended to identify key or important feature in embodiments of the present disclosure, nor is it intended to limit the scope of the present disclosure. Other feature of the present disclosure will be easily understood through the following description.

### BRIEF DESCRIPTION OF THE DRAWINGS

The accompanying drawings are used for better understanding of the solution and do not constitute a limitation to the present disclosure, wherein:
FIG. 1 schematically shows an exemplary system architecture to which a method and an apparatus of processing a speech may be applied according to embodiments of the present disclosure;
FIG. 2 schematically shows a flowchart of a method of processing a speech according to embodiments of the present disclosure;
FIG. 3 schematically shows a flowchart of determining a sound source of a wake-up speech according to embodiments of the present disclosure;
FIG. 4 schematically shows a schematic diagram of an application scenario of a method of processing a speech according to embodiments of the present disclosure;
FIG. 5 schematically shows a schematic diagram of an application scenario of a method of processing a speech according to other embodiments of the present disclosure;
FIG. 6 schematically shows a block diagram of an apparatus of processing a speech according to embodiments of the present disclosure; and
FIG. 7 schematically shows a block diagram of an electronic device suitable for implementing a method of processing a speech according to embodiments of the present disclosure.

### DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

The present disclosure provides a method and an apparatus of processing a speech, an electronic device, a storage medium, and a program product.

According to embodiments of the present disclosure, the method of processing the speech may include: acquiring a wake-up voiceprint feature of a wake-up speech used for waking up a speech interaction function, in response to the speech interaction function being waked up; extracting at least one interactive voiceprint feature from a received interactive speech, wherein the received interactive speech includes at least one single-sound source interactive speech, and the at least one single-sound source interactive speech corresponds to the at least one interactive voiceprint feature one by one; determining, from the at least one interactive voiceprint feature, a target interactive voiceprint feature matched with the wake-up voiceprint feature; extracting a target speech feature from a target single-sound source interactive speech corresponding to the target interactive voiceprint feature; and transmitting the target speech feature, so that a speech recognition is performed based on the target speech feature.

With the method of processing the speech provided by embodiments of the present disclosure, it is possible to determine, from at least one interactive voiceprint feature, the target interactive voiceprint feature matched with the wake-up voiceprint feature, and determine the target single-sound source interactive speech output by an awakener corresponding to the target interactive voiceprint feature, so that a speech interaction object may be accurately determined, and an intelligence and an accuracy of the speech interaction function may be improved. Furthermore, by extracting the target speech feature from the target single-sound source interactive speech and transmitting the target speech feature to a server, the speech recognition may be performed by the server based on the target speech feature, and a speech recognition ability may be improved by using the server. In addition, by transmitting the target speech feature as a data stream, a data transmission efficiency may be improved on the basis of improving the speech recognition ability.

In the technical solution of the present disclosure, the collection, storage, use, processing, transmission, provision, disclosure and application of speech information involved are all in compliance with the provisions of relevant laws and regulations, and necessary confidentiality measures have been taken, and it does not violate public order and good morals. In the technical solution of the present disclosure, before obtaining or collecting the user's personal information, the user's authorization or consent is obtained.

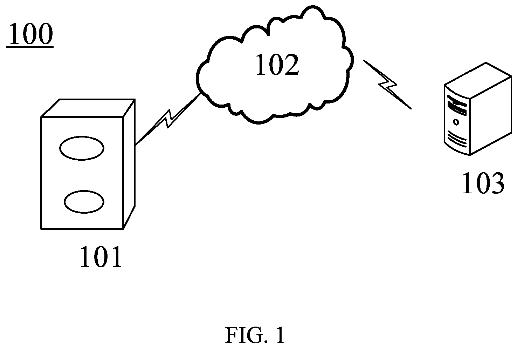

FIG. 1 schematically shows an exemplary system architecture to which a method and an apparatus of processing a speech may be applied according to embodiments of the present disclosure.

It should be noted that FIG. 1 is only an example of a system architecture to which embodiments of the present disclosure may be applied to help those skilled in the art understand the technical content of the present disclosure, but it does not mean that embodiments of the present disclosure may not be applied to other devices, systems, environments or scenarios. For example, in other embodiments, an exemplary system architecture to which the method and the apparatus of processing the speech may be applied may include a speech interaction device, and the speech interaction device may implement the method and the apparatus of processing the speech provided in embodiments of the present disclosure without interacting with a server.

As shown in FIG. 1, a system architecture 100 according to such embodiments may include a speech interaction device 101, a network 102, and a server 103. The network 102 is a medium used to provide a communication link between the speech interaction device 101 and the server 103. The network 102 may include various connection types, such as wired or wireless communication links, etc.

A wake-up speech may be sent to the speech interaction device 101 from a user. After determining that a speech interaction function is waked up, the speech interaction device 101 may receive an interactive speech sent by the user, such as "How's the weather tomorrow?" After determining that an interactive voiceprint feature of the interactive speech is matched with a wake-up voiceprint feature of the wake-up speech, the speech interaction device 101 may extract a target speech feature from the interactive speech, and interact with the server 103 through the network 102 to transmit the target speech feature to the server 103, so that the server 103 performs a speech recognition based on the target speech feature.

Various communication client applications may be installed on the speech interaction device 101, such as knowledge reading applications, web browser applications, search applications, instant messaging tools, mailbox clients and/or social platform software, etc. (for example only).

The speech interaction device 101 may have a sound collector, such as a microphone, to collect the wake-up speech and the interactive speech of the user. The speech interaction device 101 may further have a sound player, such as a speaker, to play a sound from the speech interaction device.

The speech interaction device 101 may be any electronic device capable of interacting through a speech signal. The speech interaction device 101 may include, but is not limited to, a smart phone, a tablet computer, a laptop computer, a smart speaker, a vehicle speaker, a smart tutoring machine, a smart robot, and the like.

The server 103 may be a server that provides various services, such as a background management server (for example only) that performs a speech recognition on the target speech feature transmitted by the speech interaction device 101, and performs, for example, a subsequent search and analysis based on a speech recognition result.

The server 103 may be a cloud server, also known as a cloud computing server or a cloud host, which is a host product in a cloud computing service system to solve shortcomings of difficult management and weak business scalability existing in an existing physical host and VPS (Virtual Private Server) service. The server may also be a server of a distributed system, or a server combined with a block-chain.

It should be noted that the method of processing the speech provided by embodiments of the present disclosure may generally be performed by the speech interaction device 101. Accordingly, the apparatus of processing the speech provided by embodiments of the present disclosure may be arranged in the speech interaction device 101.

It should be understood that the number of speech interaction device, network and server shown in FIG. 1 is only schematic. According to implementation needs, any number of speech interaction device, network and server may be provided.

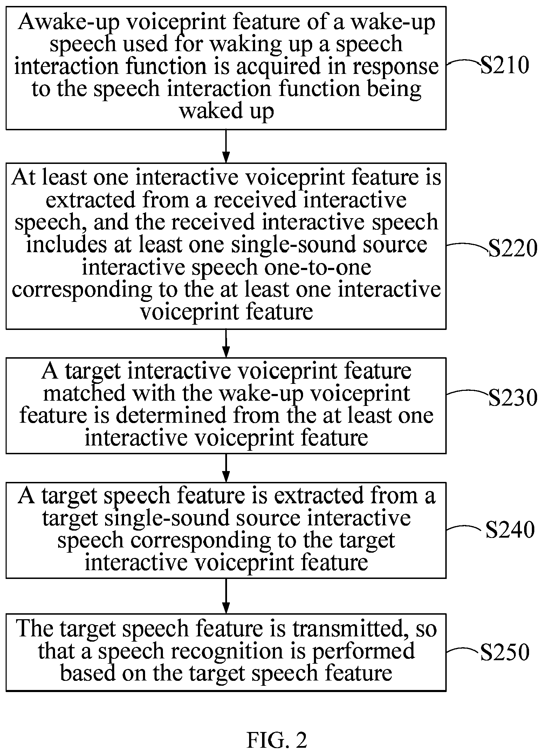

FIG. 2 schematically shows a flowchart of a method of processing a speech according to embodiments of the present disclosure.

As shown in FIG. 2, the method includes operations S210 to S250.

In operation S210, a wake-up voiceprint feature of a wake-up speech used for waking up a speech interaction function is acquired in response to the speech interaction function being waked up.

In operation S220, at least one interactive voiceprint feature is extracted from a received interactive speech, and the received interactive speech includes at least one single-sound source interactive speech, and the at least one single-sound source interactive speech corresponds to the at least one interactive voiceprint feature one by one.

In operation S230, a target interactive voiceprint feature matched with the wake-up voiceprint feature is determined from the at least one interactive voiceprint feature.

In operation S240, a target speech feature is extracted from a target single-sound source interactive speech corresponding to the target interactive voiceprint feature.

In operation S250, the target speech feature is transmitted, so that a speech recognition is performed based on the target speech feature.

According to embodiments of the present disclosure, the wake-up speech may refer to a speech signal received before the speech interaction function is waked up, such as a speech including a wake-up word, or a speech including a non-wake-up word.

According to embodiments of the present disclosure, the speech interaction function may refer to a function with which the interactive speech from the user may be received and a speech feedback result corresponding to the interactive speech may be output to the user.

For example, the speech interaction function may be implemented to receive a speech command with an interactive speech of "Please play a song" from the user, output a speech feedback result corresponding to the interactive speech, such as "Now play a song of singer XX for you" to the user, and then play the song.

According to embodiments of the present disclosure, it is possible to perform, for example, a speech recognition on a received wake-up speech to obtain a speech recognition result. Based on the speech recognition result, it may be determined whether the wake-up speech meets a predetermined wake-up rule or not. If the wake-up speech meets the predetermined wake-up rule, it is determined that the speech interaction function is waked up. In response to the speech interaction function being waked up, the wake-up voiceprint feature may be extracted from the wake-up speech used for waking up the speech interaction function, and the wake-up voiceprint feature may be recorded and saved.

According to embodiments of the present disclosure, a voiceprint feature may refer to a feature carrying an identification attribute of a sound, and the voiceprint feature may be used to recognize a source of the sound, that is, a sound source. For example, the voiceprint feature may be extracted from the sound, and whether the sound source is a human or an animal may be recognized based on the voiceprint feature.

According to embodiments of the present disclosure, the wake-up voiceprint feature may be a voiceprint feature extracted from the wake-up speech, and the interactive voiceprint feature may be a voiceprint feature extracted from the interactive speech. The interactive speech refers to a speech signal received after a determination that the speech interaction function is successfully waked up by the wake-up speech.

According to embodiments of the present disclosure, the interactive speech may include a single-sound source interactive speech, but is not limited to this, and the interactive speech may also include a plurality of single-sound source interactive speeches. The plurality of single-sound source interactive speeches may be obtained by acquiring and combining, by different speech signal acquisition channels of a speech interaction device, single-sound source interactive speeches simultaneously sent to the speech interaction device from a plurality of single sound sources. For example, if single-sound source interactive speeches are simultaneously sent from a girl A and a girl B, respectively, the speech interaction device may simultaneously receive the single-sound source interactive speech of the girl A and the single-sound source interactive speech of the girl B and form an interactive speech including two single-sound source interactive speeches.

According to embodiments of the present disclosure, it is possible to extract at least one interactive voiceprint feature one-to-one corresponding to at least one single-sound source interactive speech from an interactive speech including the at least one single-sound source interactive speech, and it is possible to determine a target interactive voiceprint feature matched with the wake-up voiceprint feature from the at least one interactive voiceprint feature.

For example, if the wake-up speech comes from the girl A, and the speech interaction function is successfully waked up by the wake-up speech of the girl A, then according to the wake-up voiceprint feature, the interactive voiceprint feature corresponding to the single-sound source interactive speech of the girl A may be determined from the interactive speech including the single-sound source interactive speech of the girl A and the single-sound source interactive speech of the girl B as the target voiceprint feature, and the single-sound source interactive speech of the girl A may be further determined as the target single-sound source interactive speech. Various speech separation technologies may be used to separate and extract, for example, the single-sound source interactive speech of the girl A (that is, the target single-sound source interactive speech) from the interactive speech, so as to eliminate an interference from, for example, the single-sound source interactive speech of the girl B which is simultaneously sent from the girl B, or other outside sounds. Therefore, the method of processing the speech provided by embodiments of the present disclosure is applicable to a speech interaction application scenario in which multiple people are present at the same time.

According to embodiments of the present disclosure, the target speech feature may be extracted from the target single-sound source interactive speech, and a speech recognition and a semantic recognition may be performed using the target speech feature, so as to achieve a speech interaction function.

According to embodiments of the present disclosure, the target speech feature may refer to a target speech feature vector obtained based on the target single-sound source interactive speech, which may be, for example, an MFCC (Mel-scale Frequency Cepstral Coefficients) speech feature. A speech recognition may be performed on the target single-sound source interactive speech using the target speech feature, so as to achieve a speech interaction with the awakener.

According to embodiments of the present disclosure, it is possible to perform the speech recognition based on the target speech feature locally on the speech interaction device so as to achieve the speech interaction. However, the present disclosure is not limited to this. It is also possible to transmit the target speech feature to a server, such as a cloud server, and perform the speech recognition based on the target speech feature by using a speech recognition model provided on the server.

According to embodiments of the present disclosure, in a case of performing the speech recognition based on the target speech feature by using the speech recognition model provided on the server, it is possible to optimize the speech recognition model on the server in real time, so that situations such as a large amount of speech data and a high semantic complexity may be handled through the speech recognition model provided on the server.

According to embodiments of the present disclosure, it is possible to transmit the target single-sound source interactive speech as a data stream from the local end of the speech interaction device to a server such as a cloud server, and perform a complete speech recognition operation based on the target single-sound source interactive speech by using a speech feature extraction model and a speech recognition model provided on the server.

According to the exemplary embodiments of the present disclosure, by using the target speech feature as the data stream transmitted between the speech interaction device and the server, a data transmission amount may be reduced, a data transmission speed may be improved, and the server may perform a subsequent speech recognition directly based on the target speech feature to improve a processing efficiency.

With the method of processing the speech provided by embodiments of the present disclosure, it is possible to determine, from at least one interactive voiceprint feature, the target interactive voiceprint feature matched with the wake-up voiceprint feature, and determine the target single-sound source interactive speech output by the awakener corresponding to the target interactive voiceprint feature, so as to accurately determine the speech interaction object and improve the intelligence and accuracy of the speech interaction function. Moreover, by extracting the target speech feature from the target single-sound source interactive speech and transmitting the target speech feature to the server, the server may perform a speech recognition based on the target speech feature, so that a speech recognition ability may be improved by using the server. In addition, the target speech feature is transmitted as the data stream, so that a data transmission efficiency may be improved on the basis of improving the speech recognition ability.

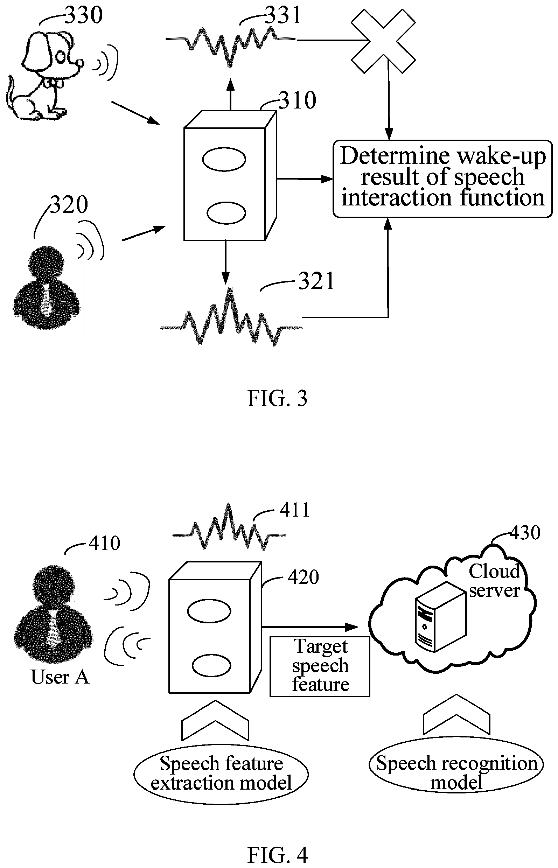

For example, the method of processing the speech shown in FIG. 2 will be further described with reference to FIG. 3 to FIG. 5 in combination with specific embodiments.

According to embodiments of the present disclosure, before performing the operation S210 of acquiring the wake-up voiceprint feature of the wake-up speech used for waking up the speech interaction function in response to the speech interaction function being waked up, an operation of determining a sound source of the wake-up speech as shown in FIG. 3 may be performed.

FIG. 3 schematically shows a flowchart of determining a sound source of a wake-up speech according to embodiments of the present disclosure.

As shown in FIG. 3, a sound source of a wake-up speech received by a speech interaction device 310 may be a human sound source 320, or an animal sound source 330, such as a dog sound source. A wake-up voiceprint feature of the wake-up speech, such as a wake-up voiceprint feature 321 of the human sound source 320 and a wake-up voiceprint feature 331 of the animal sound source 330, may be extracted from the received wake-up speech. The speech interaction device 310 may determine a sound source of the wake-up speech based on the wake-up voiceprint feature. An operation of determining a wake-up result of the speech interaction function based on the wake-up speech may be performed in response to determining that the sound source of the wake-up speech is a human sound source. The operation of determining the wake-up result of the speech interaction function based on the wake-up speech may be stopped in response to determining that the sound source of the wake-up speech is a non-human sound source, such as an animal sound source.

According to embodiments of the present disclosure, in response to determining that the sound source of the wake-up speech is a human sound source, the wake-up result of the speech interaction function may be determined based on the wake-up speech. For example, based on the wake-up speech, it is determined whether the wake-up speech meets a predetermined wake-up rule. If the wake-up speech meets the predetermined wake-up rule, it is determined that the speech interaction function is waked up, and the wake-up voiceprint feature may be recorded. If the wake-up speech does not meet the predetermined wake-up rule, it is determined that the speech interaction function is not successfully waked up, and a subsequent operation is stopped.

According to embodiments of the present disclosure, by a preprocessing operation of determining whether the sound source of the wake-up speech is a human sound source or not, a subsequent determination of whether the speech interaction function is successfully waked up or not may be performed more accurately and efficiently, so as to avoid a wrong determination caused by a similarity of syllables of wake-up speeches from two different sound sources.

According to embodiments of the present disclosure, the operation S230 of determining, from the at least one interactive voiceprint feature, the target interactive voiceprint feature matched with the wake-up voiceprint feature may include the following operations.

For example, for each interactive voiceprint feature of the at least one interactive voiceprint feature, a voiceprint similarity between the interactive voiceprint feature and the wake-up voiceprint feature may be determined; and an interactive voiceprint feature with a greatest voiceprint similarity may be determined from the at least one interactive voiceprint feature as the target interactive voiceprint feature.

According to embodiments of the present disclosure, the at least one interactive voiceprint feature may include a first interactive voiceprint feature, a second interactive voiceprint feature, and a third interactive voiceprint feature. Respective voiceprint similarities between the three interactive voiceprint features and the wake-up voiceprint feature may be determined. For example, the voiceprint similarity between the first interactive voiceprint feature and the wake-up voiceprint feature is 90%, the voiceprint similarity between the second interactive voiceprint feature and the wake-up voiceprint feature is 50%, and the voiceprint similarity between the third interactive voiceprint feature and the wake-up voiceprint feature is 40%. A plurality of voiceprint similarities may be sorted in a descending order, and a top voiceprint similarity may be determined from the plurality of voiceprint similarities, that is, a result of a greatest voiceprint similarity may be determined. For example, if the voiceprint similarity between the first interactive voiceprint feature and the wake-up voiceprint feature is the greatest, it may indicate that the first interactive voiceprint feature is matched with the wake-up voiceprint feature, and the first interactive voiceprint feature may be determined as the target interactive voiceprint feature.

With the method of determining the target voiceprint feature provided by embodiments of the present disclosure, the target single-sound source interactive speech sent from the awakener may be accurately recognized, so that an intelligent and accurate speech interaction may be performed with the awakener in a case of a presence of an outside sound during the speech interaction, and an interference of the outside sound may be avoided.

According to exemplary embodiments of the present disclosure, after the voiceprint similarity between the interactive voiceprint feature and the wake-up voiceprint feature is determined, it is possible to perform preliminary screening according to a voiceprint similarity threshold to remove a result of a voiceprint similarity less than the voiceprint similarity threshold. Then, a plurality of voiceprint similarities obtained after screening may be sorted in a descending order so as to obtain a sorting result, and a top voiceprint similarity may be determined as a result of a greatest voiceprint similarity.

For example, the voiceprint similarity threshold may be set to 60% to screen the above-mentioned three voiceprint similarities. After screening, the second interactive voiceprint feature with the voiceprint similarity of 50% and the third interactive voiceprint feature with the voiceprint similarity of 40% may be removed. It may be directly determined that the first interactive voiceprint feature with the voiceprint similarity of 90% is the target interactive voiceprint feature. In this way, a process of sorting a plurality of voiceprint similarities may be omitted.

With the method of determining the target voiceprint feature provided by exemplary embodiments of the present disclosure, the preprocessing operation of screening may be used to improve the processing efficiency of determining the target interactive voiceprint feature, so as to save time and improve a user experience.

According to embodiments of the present disclosure, in the process of performing the operation of determining the target voiceprint feature, in addition to improving the processing efficiency of determining the target voiceprint feature by using the preprocessing operation of screening, the efficiency of determining the target voiceprint feature may be further improved by determining the sound source of the single-sound source interactive speech.

For example, the sound source of the single-sound source interactive speech corresponding to the interactive voiceprint feature may be determined; and the voiceprint similarity between the interactive voiceprint feature and the wake-up voiceprint feature may be determined in response to determining that the sound source of the single-sound source interactive speech is a human sound source.

According to embodiments of the present disclosure, before determining the voiceprint similarity between the first interactive voiceprint feature and the wake-up voiceprint feature, the voiceprint similarity between the second interactive voiceprint feature and the wake-up voiceprint feature, and the voiceprint similarity between the third interactive voiceprint feature and the wake-up voiceprint feature, it may be determined whether respective sound sources of the first interactive voiceprint feature, the second interactive voiceprint feature and the third interactive voiceprint feature are human sound sources, and an operation of determining the voiceprint similarity may be performed if it is determined that the sound source is a human sound source.

For example, the respective sound sources of the first interactive voiceprint feature, the second interactive voiceprint feature and the third interactive voiceprint feature may be determined based on the first interactive voiceprint feature, the second interactive voiceprint feature and the third interactive voiceprint feature, respectively. If it is determined that the sound source of the first interactive voiceprint feature is a human sound source, an operation of determining whether the first interactive voiceprint feature is matched with the wake-up voiceprint feature or not, such as an operation of determining the voiceprint similarity between the first interactive voiceprint feature and the wake-up voiceprint feature, may be performed. If it is determined that the sound source of the second interactive voiceprint feature and the sound source of the third interactive voiceprint feature are both animal sound sources, an operation of determining whether the second interactive voiceprint feature and the third interactive voiceprint feature are respectively matched with the wake-up voiceprint feature may be stopped.

With the method of determining the target voiceprint feature provided by exemplary embodiments of the present disclosure, by the preprocessing operations of determining whether the sound source of the interactive voiceprint feature is a human sound source or not and whether the voiceprint similarity between the interactive voiceprint feature and the wake-up voiceprint feature is greater than the voiceprint similarity threshold or not, the processing efficiency and accuracy of determining the target interactive voiceprint feature may be improved, and the user experience may be improved.

FIG. 4 schematically shows a schematic diagram of an application scenario of a method of processing a speech according to embodiments of the present disclosure.

As shown in FIG. 4, in response to a speech interaction function of a speech interaction device 420 being waked up successfully by a wake-up speech of a user A 410, a wake-up voiceprint feature 411 of the user A 410 is extracted and recorded. If a single-sound source interactive speech, such as "How's the weather tomorrow?", is subsequently sent from the user A 410 and received by the speech interaction device 420, the speech interaction device 420 may extract an interactive voiceprint feature from the interactive speech, then determine a voiceprint similarity between the interactive voiceprint feature and the wake-up voiceprint feature, and determine the interactive voiceprint feature as a target interactive voiceprint feature based on the voiceprint similarity. The speech interaction device 420 may determine a single-sound source interactive speech corresponding to the target interactive voiceprint feature as a target single-sound source interactive speech. The speech interaction device 420 may further extract a target speech feature from the target single-sound source interactive speech by using a speech feature extraction model.

The target speech feature may be transmitted by the speech interaction device 420 to a cloud server 430, so that the cloud server 430 may perform a speech recognition based on the target speech feature by using a speech recognition model.

According to embodiments of the present disclosure, the speech interaction device may be provided with a speech feature extraction model which may extract, for example, short time spectral features such as Mel-scale Frequency Cepstral Coefficients (MFCC), Perceptual Linear Prediction (PLP), Linear Prediction Cepstral Coefficients (LPCC), and the like. According to embodiments of the present disclosure, the target single-sound source interactive speech may be input into a speech feature extraction model to obtain a target speech feature. According to embodiments of the present disclosure, the target speech feature may be a vector sequence consisting of parameters reflecting speech characteristics which are extracted from a speech waveform. The parameters reflecting the speech characteristics may include, for example, an amplitude, an average energy of short frames, a zero crossing rate of short frames, a short time autocorrelation coefficient, etc.

According to embodiments of the present disclosure, the cloud server may be provided with a speech recognition model, such as a model including or combined by at least one selected from an HMM model (Hidden Markov model), a dictionary, or an N-Gram language model (a probability-based language statistical model). According to embodiments of the present disclosure, the target speech feature may be input into the speech recognition model to obtain a speech recognition result. The cloud server may perform corresponding operations such as query and search based on the speech recognition result, and feed back an execution result to the speech interaction device, so that the speech interaction device may feed back to the user through a speech.

Different from directly transmitting audio data as a data stream, transmitting the target speech feature as a data stream may reduce a data transmission amount and improve a transmission efficiency. In addition, the speech recognition ability may be improved by performing the speech recognition using the cloud server. For example, the speech recognition model may be optimized and trained in real time to improve the recognition efficiency and accuracy of the speech recognition.

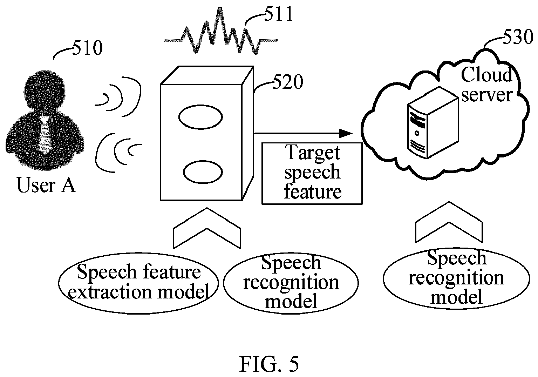

FIG. 5 schematically shows a schematic diagram of an application scenario of a method of processing a speech according to other embodiments of the present disclosure.

A difference between the method of processing the speech shown in FIG. 5 and the method of processing the speech shown in FIG. 4 lies in that a speech interaction device 520 is provided with both a speech recognition model and a speech feature extraction model. After a target single-sound source interactive speech is determined, a data amount of the target single-sound source interactive speech may be further determined. A data amount threshold is predetermined, and the data amount of the target single-sound source interactive speech is compared with the predetermined data amount threshold.

In response to determining the data amount of the target single-sound source interactive speech is greater than or equal to the predetermined data amount threshold, the target speech feature may be transmitted to cloud server 530, so that the cloud server 530 performs a speech recognition using the target speech feature. In response to determining that the data amount of the target single-sound source interactive speech is less than the predetermined data amount threshold, a speech recognition may be performed directly at a local end of the speech interaction device 520.

For example, if a target single-sound source interactive speech output by a user A 510 is a sentence "How's the weather today?" and a data amount of the target single-sound source interactive speech is less than the predetermined data amount threshold, then a target speech feature may be processed directly by a speech recognition model provided in the speech interactive device 520 to obtain a speech recognition result.

For example, if the target single-sound source interactive speech output by the user 510 is a long session and the data amount of the target single-sound source interactive speech is greater than the predetermined data amount threshold, then the target speech feature may be transmitted to the cloud server 530, and the target speech feature with the data amount greater than the predetermined data amount threshold may be processed by the speech recognition model provided in the cloud server 530 to obtain a speech recognition result.

According to embodiments of the present disclosure, different operations may be performed on the target single-sound source interactive speech according to the predetermined data amount threshold, and the target single-sound source interactive speech may be reasonably classified, for example, based on the data amount. A speech recognition and a semantic understanding of the target single-sound source interactive speech with a data amount greater than the predetermined data amount threshold are more difficult than those of a target single-sound source interactive speech with a data amount less than the predetermined data amount threshold. The speech recognition model provided in the cloud server may be optimized and trained in real time, and may be more powerful in speech recognition and semantic understanding than an offline speech recognition model provided in the speech interaction device. By reasonably classifying the target single-sound source interactive speech according to the data amount, a subsequent speech recognition operation may be performed more effectively and reasonably, and the processing efficiency may be improved while ensuring an overall intelligence of the speech interaction.

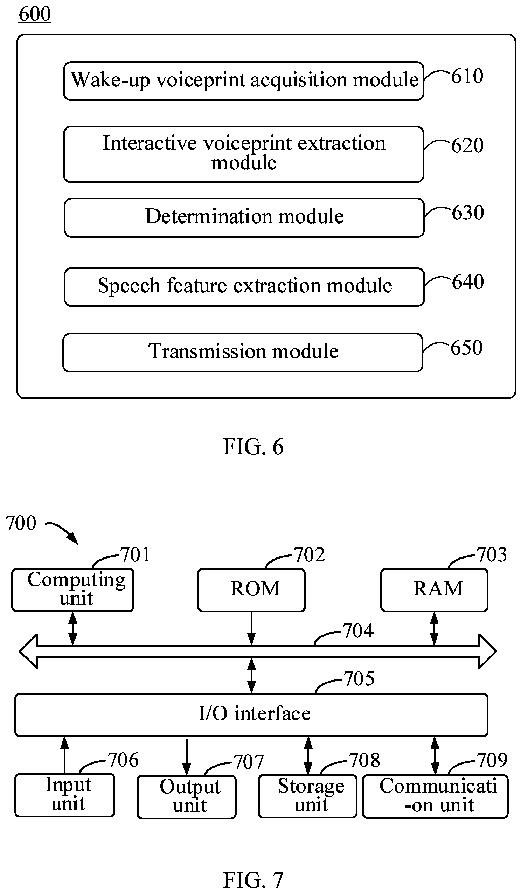

FIG. 6 schematically shows a block diagram of an apparatus of processing a speech according to embodiments of the present disclosure.

As shown in FIG. 6, an apparatus 600 of processing a speech may include a wake-up voiceprint acquisition module 610, an interactive voiceprint extraction module 620, a determination module 630, a speech feature extraction module 640, and a transmission module 650.

The wake-up voiceprint acquisition module 610 is used to acquire a wake-up voiceprint feature of a wake-up speech used for waking up a speech interaction function, in response to the speech interaction function being waked up.

The interactive voiceprint extraction module 620 is used to extract at least one interactive voiceprint feature from a received interactive speech, and the interactive speech includes at least one single-sound source interactive speech, and the at least one single-sound source interactive speech corresponds to the at least one interactive voiceprint feature one by one.

The determination module 630 is used to determine, from the at least one interactive voiceprint feature, a target interactive voiceprint feature matched with the wake-up voiceprint feature.

The speech feature extraction module 640 is used to extract a target speech feature from a target single-sound source interactive speech corresponding to the target interactive voiceprint feature.

The transmission module 650 is used to transmit the target speech feature, so that a speech recognition is performed based on the target speech feature.

According to embodiments of the present disclosure, the apparatus of processing the speech may further include a receiving module, a sound source determination module, and a wake-up result determination module.

Before the wake-up voiceprint acquisition module performs an operation, the receiving module is used to extract, from a received wake-up speech, a wake-up voiceprint feature of the received wake-up speech; the sound source determination module is used to determine a sound source of the received wake-up speech based on the wake-up voiceprint feature of the received wake-up speech; and the wake-up result determination module is used to determine a wake-up result of the speech interaction function based on the received wake-up speech, in response to determining that the sound source of the received wake-up speech is a human sound source.

According to embodiments of the present disclosure, the determination module may include a similarity determination unit and a target determination unit.

The similarity determination unit is used to determine, for each interactive voiceprint feature of the at least one interactive voiceprint feature, a voiceprint similarity between the interactive voiceprint feature and the wake-up voiceprint feature.

The target determination unit is used to determine, from the at least one interactive voiceprint feature, an interactive voiceprint feature with a greatest voiceprint similarity as the target interactive voiceprint feature.

According to embodiments of the present disclosure, the similarity determination unit may include a sound source determination sub-unit and a similarity determination sub-unit.

The sound source determination sub-unit is used to determine a sound source of a single-sound source interactive speech corresponding to the interactive voiceprint feature.

The similarity determination sub-unit is used to determine the voiceprint similarity between the interactive voiceprint feature and the wake-up voiceprint feature in response to determining that the sound source of the single-sound source interactive speech is a human sound source.

According to embodiments of the present disclosure, the transmission module may include a data amount determination unit and a first transmission unit.

The data amount determination unit is used to determine a data amount of the target single-sound source interactive speech.

The first transmission unit is used to transmit the target speech feature in response to determining that the data amount is greater than or equal to a predetermined data amount threshold.

According to embodiments of the present disclosure, the apparatus of processing the speech is applicable to a speech interaction device.

According to embodiments of the present disclosure, the transmission module may include a second transmission unit.

The second transmission unit is used to transmit the target speech feature to a cloud server by using the speech interaction device, so that the cloud server performs a speech recognition based on the target speech feature.

According to embodiments of the present disclosure, the present disclosure further provides an electronic device, a readable storage medium, and a computer program product.

According to embodiments of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method described above.

According to embodiments of the present disclosure, a non-transitory computer-readable storage medium having computer instructions therein is provided, and the computer instructions are configured to cause a computer to implement the method described above.

According to embodiments of the present disclosure, a computer program product containing a computer program is provided, and the computer program, when executed by a processor, causes the processor to implement the method described above.

FIG. 7 shows a schematic block diagram of an exemplary electronic device 700 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 7, the electronic device 700 includes a computing unit 701 which may perform various appropriate actions and processes according to a computer program stored in a read only memory (ROM) 702 or a computer program loaded from a storage unit 708 into a random access memory (RAM) 703. In the RAM 703, various programs and data necessary for an operation of the electronic device 700 may also be stored. The computing unit 701, the ROM 702 and the RAM 703 are connected to each other through a bus 704. An input/output (I/O) interface 705 is also connected to the bus 704.

A plurality of components in the electronic device 700 are connected to the I/O interface 705, including: an input unit 706, such as a keyboard, or a mouse; an output unit 707, such as displays or speakers of various types; a storage unit 708, such as a disk, or an optical disc; and a communication unit 709, such as a network card, a modem, or a wireless communication transceiver. The communication unit 709 allows the electronic device 700 to exchange information/data with other devices through a computer network such as Internet and/or various telecommunication networks.

The computing unit 701 may be various general-purpose and/or dedicated processing assemblies having processing and computing capabilities. Some examples of the computing unit 701 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 701 executes various methods and steps described above, such as the method of processing the speech. For example, in some embodiments, the method of processing the speech may be implemented as a computer software program which is tangibly embodied in a machine-readable medium, such as the storage unit 708. In some embodiments, the computer program may be partially or entirely loaded and/or installed in the electronic device 700 via the ROM 702 and/or the communication unit 709. The computer program, when loaded in the RAM 703 and executed by the computing unit 701, may execute one or more steps in the method of processing the speech described above. Alternatively, in other embodiments, the computing unit 701 may be configured to perform the method of processing the speech by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, speech input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of processing a speech, comprising:
acquiring (S210) a wake-up voiceprint feature of a wake-up speech configured for waking up a speech interaction function, in response to the speech interaction function being waked up;
extracting (S220) at least one interactive voiceprint feature from a received interactive speech, wherein the received interactive speech comprises at least one single-sound source interactive speech, and the at least one single-sound source interactive speech corresponds to the at least one interactive voiceprint feature one by one;
determining (S230), from the at least one interactive voiceprint feature, a target interactive voiceprint feature matched with the wake-up voiceprint feature;
extracting (S240) a target speech feature from a target single-sound source interactive speech corresponding to the target interactive voiceprint feature; and
transmitting (S250) the target speech feature, so that a speech recognition is performed based on the target speech feature.

2. The method according to claim 1, further comprising: before acquiring, in response to the speech interaction function being waked up, the wake-up voiceprint feature of the wake-up speech configured for waking up the speech interaction function,
extracting, from a received wake-up speech, a wake-up voiceprint feature of the received wake-up speech;
determining a sound source of the received wake-up speech based on the wake-up voiceprint feature of the received wake-up speech; and
determining a wake-up result of the speech interaction function based on the received wake-up speech, in response to determining that the sound source of the received wake-up speech is a human sound source.

3. The method according to claim 1 or 2, wherein the determining, from the at least one interactive voiceprint feature, a target interactive voiceprint feature matched with the wake-up voiceprint feature comprises:
determining, for each interactive voiceprint feature of the at least one interactive voiceprint feature, a voiceprint similarity between the interactive voiceprint feature and the wake-up voiceprint feature; and
determining, from the at least one interactive voiceprint feature, an interactive voiceprint feature with a greatest voiceprint similarity as the target interactive voiceprint feature.

4. The method according to claim 3, wherein the determining, for each interactive voiceprint feature of the at least one interactive voiceprint feature, a voiceprint similarity between the interactive voiceprint feature and the wake-up voiceprint feature comprises:
determining a sound source of a single-sound source interactive speech corresponding to the interactive voiceprint feature; and
determining the voiceprint similarity between the interactive voiceprint feature and the wake-up voiceprint feature in response to determining that the sound source of the single-sound source interactive speech is a human sound source.

5. The method according to claim 1, wherein the transmitting the target speech feature comprises:
determining a data amount of the target single-sound source interactive speech; and
transmitting the target speech feature in response to determining that the data amount is greater than or equal to a predetermined data amount threshold.

6. The method according to any one of claims 1 to 5, wherein the method is implemented by a speech interaction device, and
the transmitting the target speech feature comprises:
transmitting the target speech feature to a cloud server by using the speech interaction device, so that the cloud server performs a speech recognition based on the target speech feature.

7. An apparatus (600) of processing a speech, comprising:
a wake-up voiceprint acquisition module (610) configured to acquire a wake-up voiceprint feature of a wake-up speech configured for waking up a speech interaction function, in response to the speech interaction function being waked up;
an interactive voiceprint extraction module (620) configured to extract at least one interactive voiceprint feature from a received interactive speech, wherein the received interactive speech comprises at least one single-sound source interactive speech, and the at least one single-sound source interactive speech corresponds to the at least one interactive voiceprint feature one by one;
a determination module (630) configured to determine, from the at least one interactive voiceprint feature, a target interactive voiceprint feature matched with the wake-up voiceprint feature;
a speech feature extraction module (640) configured to extract a target speech feature from a target single-sound source interactive speech corresponding to the target interactive voiceprint feature; and
a transmission module (650) configured to transmit the target speech feature, so that a speech recognition is performed based on the target speech feature.

8. The apparatus (600) according to claim 7, further comprising: before the wake-up voiceprint acquisition module (610),
a receiving module configured to extract, from a received wake-up speech, a wake-up voiceprint feature of the received wake-up speech;
a sound source determination module configured to determine a sound source of the received wake-up speech based on the wake-up voiceprint feature of the received wake-up speech; and
a wake-up result determination module configured to determine a wake-up result of the speech interaction function based on the received wake-up speech, in response to determining that the sound source of the received wake-up speech is a human sound source.

9. The apparatus (600) according to claim 7 or 8, wherein the determination module (630) comprises:
a similarity determination unit configured to determine, for each interactive voiceprint feature of the at least one interactive voiceprint feature, a voiceprint similarity between the interactive voiceprint feature and the wake-up voiceprint feature; and
a target determination unit configured to determine, from the at least one interactive voiceprint feature, an interactive voiceprint feature with a greatest voiceprint similarity as the target interactive voiceprint feature.

10. The apparatus (600) according to claim 9, wherein the similarity determination unit comprises:
a sound source determination sub-unit configured to determine a sound source of a single-sound source interactive speech corresponding to the interactive voiceprint feature; and
a similarity determination sub-unit configured to determine the voiceprint similarity between the interactive voiceprint feature and the wake-up voiceprint feature in response to determining that the sound source of the single-sound source interactive speech is a human sound source.

11. The apparatus (600) according to claim 7, wherein the transmission module (650) comprises:
a data amount determination unit configured to determine a data amount of the target single-sound source interactive speech; and
a first transmission unit configured to transmit the target speech feature in response to determining that the data amount is greater than or equal to a predetermined data amount threshold.

12. The apparatus (600) according to any one of claims 7 to 11, wherein the apparatus (600) is implemented by a speech interaction device, and
the transmission module (650) comprises:
a second transmission unit configured to transmit the target speech feature to a cloud server by using the speech interaction device, so that the cloud server performs a speech recognition based on the target speech feature.

13. An electronic device (700), comprising:
at least one processor; and
a memory communicatively connected to the at least one processor, wherein the memory stores instructions executable by the at least one processor, and the instructions, when executed by the at least one processor, cause the at least one processor to implement the method according to any one of claims 1 to 6.

14. A non-transitory computer-readable storage medium having computer instructions therein, wherein the computer instructions are configured to cause a computer system to implement the method according to any one of claims 1 to 6.

15. A computer program product containing a computer program, wherein the computer program, when executed by a processor, causes the processor to implement the method according to any one of claims 1 to 6.
